(19) Europäisches Patentamt
European Patent Office
Office européen des brevets

(11) Veröffentlichungsnummer: **0 351 875 A2**

# (12) EUROPÄISCHE PATENTANMELDUNG

(21) Anmeldenummer: **89113451.2**

(51) Int. Cl.⁴: **G11B 7/24**

(22) Anmeldetag: **21.07.89**

(30) Priorität: **22.07.88 JP 183329/88**

(43) Veröffentlichungstag der Anmeldung:
**24.01.90 Patentblatt 90/04**

(84) Benannte Vertragsstaaten:
**BE DE FR GB IT SE**

(71) Anmelder: **Jujo Paper Co., Ltd.**
**14-1, Oji 1-chome**
**Kita-ku Tokyo(JP)**

(72) Erfinder: **Satake, Toshimi CENTRAL RESEARCH LABORATORY**
**JUJO PAPER CO., LTD: 21-1, Oji 5-chome**
**Kita-ku Tokyo(JP)**
Erfinder: **Nagai, Tomoaki CENTRAL RESEARCH LABORATORY**
**JUJO PAPER CO., LTD: 21-1, Oji 5-chome**
**Kita-ku Tokyo(JP)**

(74) Vertreter: **Kinzebach, Werner, Dr. et al**
**Patentanwälte Reitstötter, Kinzebach und Partner Sternwartstrasse 4 Postfach 86 06 49**
**D-8000 München 86(DE)**

## (54) Masse zur Herstellung eines im nahen IR absorbierenden Materials und die Masse oder das Material enthaltender Formkörper.

(57) Die Erfindung betrifft eine Masse zur Herstellung eines im nahen IR-absorbierenden Materials, die mindestens eine Thioamidverbindung und mindestens eine Kupfer- und/oder Bleiverbindung enthält. Beim Erhitzen dieser Masse erhält man ein Material, das nahes IR-Licht absorbiert. Die erfindungsgemäße Masse und das erfindungsgemäße Material sind daher brauchbar zur Herstellung von Formkörpern, die im nahen IR absorbieren und daher für die Herstellung von optischen Materialien brauchbar sind.

EP 0 351 875 A2

# Masse zur Herstellung eines im nahen IR absorbierenden Materials und die Masse oder das Material enthaltender Formkörper

Diese Erfindung betrifft eine im nahen IR absorbierende Masse, die mindestens eine Thioamidverbindung und mindestens eine Verbindung aus der Gruppe der Kupferverbindungen und Bleiverbindungen enthält, und ein im nahen IR absorbierendes Material, sowie einen Formkörper, der diese Masse oder dieses Material enthält.

Die im nahen IR absorbierenden Materialien wurden in den letzten Jahren besonders entwickelt. Diese Materialien werden vielfältig in der Praxis verwendet, z.B. als lichtempfindliche Materialien, bei denen ein Halbleiterlaser mit einer Wellenlänge im nahen IR-Bereich, usw. als Lichtquelle verwendet wird; als Informationsaufzeichnungsmaterialien wie optische Aufzeichnungsscheiben; als optische Materialien wie Filter und Filme für das nahe IR usw; als Licht-Wärmeumwandlungsaufzeichnungsmaterialien in Kombination mit den wärmeempfindlichen Materialien.

Als bekannte im nahen IR absorbierende Materialien werden ein Chrom-Kobalt-Komplex in der japanischen Patentpublikation Nr. 42269/1985 beschrieben; ein Thiol-Nickel-Komplex in JO-LS Nr. 21294/1985; ein Anthrachinonderivat in JO-LS Nr. 115958/1986; eine neue Squaryliumverbindung mit einer Maximumwellenlänge von 700-800 nm in JO-LS Nr. 2.18551/1986. Weiter werden in "Im nahen IR absorbierender Farbstoff" (Kagakukogyo 43, Mai 1959) Nitrosoverbindungen, ihre Metallkomplexe, Polymethinfarbstoffe (Cyaninfarbstoffe), Thiol-Kobalt-komplexe, Thiol-Platin-Komplexe, Thio-Palladiumkomplexe, Phthalocyaninfarbstoffe, Triarylmethanfarbstoffe, Immoniumfarbstoffe, Diimmoniumfarbstoffe, Naphthochinonfarbstoffe und dergleichen beschrieben.

Die bisherigen, im nahen IR absorbierenden Materialien des organischen Typs haben die Nachteile, daß die Dauerhaftigkeit unterlegen ist; d.h. daß die Anfangseigenschaften unter dem Einfluß der Umweltbedingungen oder im Lauf der Zeit verschlechtert werden. Andererseits weisen die im nahen IR absorbierenden Materialien des Komplextyps eine überlegene Dauerhaftigkeit auf, sie haben jedoch die Nachteile, daß wegen der Absorption des sichtbaren Lichts die Materialien stark gefärbt sind, wodurch die Materialien nur beschränkt angewandt werden. Jedes Material hat ein Absorptionsmaximum bei einer bestimmten Wellenlänge, besitzt aber fast keine Absorptionsfähigkeit bei anderen Wellenlängen. Bei einem Aufzeichnungsmaterial, bei dem das obige Material verwendet wird und wenn als Lichtquelle beispielsweise ein Laserlicht mit einer Wellenlänge im nahen IR angewandt wird, ist es erforderlich, daß die Laserwellenlänge mit dem Absorptionsmaximum des Materials übereinstimmt. Weil die Laserwellenlänge und die Absorptionsmaterialwellenlänge beschränkt sind, sind die Kombinationsmöglichkeiten, bei denen die Laserwellenlänge und die Absorptionsmaterialwellenlänge übereinstimmen, sehr gering. Weiter sind derartige Kombinationsmöglichkeiten unter Berücksichtigung von Absorptionsfähigkeit, Dauerhaftigkeit, Färbung, Kosten usw. des Aufzeichnungsmaterials praktisch fast nicht vorhanden. Daher werden diese Materialien nur beschränkt angewandt.

Der Erfindung liegt die erste Aufgabe zugrunde, ein im nahen IR absorbierendes Material mit weniger Färbung, hoher Dauerhaftigkeit und gleichmäßiger Absorption im nahen IR-Bereich von 700-2000 nm Wellenlänge zu schaffen. Der Erfindung liegt die zweite Aufgabe zugrunde, eine Masse, aus der ein im nahen IR absorbierendes Material leicht hergestellt werden kann, zu schaffen. Der Erfindung liegt die dritte Aufgabe zugrunde, einen Formkörper, der ein im nahen IR absorbierendes Material oder eine im nahen IR absorbierende Masse enthält, zu schaffen.

Diese Aufgaben werden erfindungsgemäß wie folgt gelöst. Die erfindungsgemäß im nahen IR absorbierende Masse enthält sowohl mindestens eine Thioamidverbindung aus der Gruppe der allgemeinen Formel (I) als auch eine Verbindung aus der Gruppe Kupfer- und Bleiverbindungen

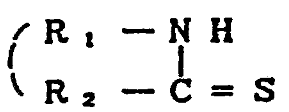

(I)

(worin $R_1$ und $R_2$ jeweils ein Wasserstoffatom, eine Alkyl-, Alkenyl-, Cycloalkyl-, Aryl-, Aralkylgruppe, oder einen einwertigen Rest eines 5- oder 6-gliedrigen Rings bedeuten, oder $R_2$ eine Alkoxygruppe bedeutet, wobei jede Gruppe durch mindestens einen Substituenten substituiert sein kann, und $R_1$ und $R_2$ gemeinsam einen Ring bilden können).

Das erfindungsgemäß im nahen IR absorbierende Material umfaßt das Reaktionsprodukt, das durch die Hitzebehandlung der erfindungsgemäßen Masse erhalten wird. Der erfindungsgemäße Formkörper umfaßt

die erfindungsgemäße Masse oder das erfindungsgemäße Material.

Die Wahl der erfindungsgemäßen Thioamidverbindungen der allgemeinen Formel (I) ist nicht besonders beschränkt, man kann z.B. folgende verwenden:

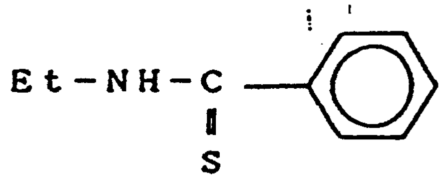

N-Äthylthiobenzamid

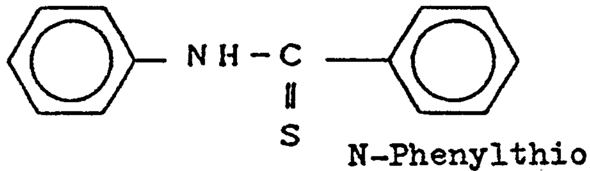

N-Phenylthiobenzamid

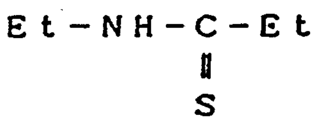

N-Äthylthioäthylamid

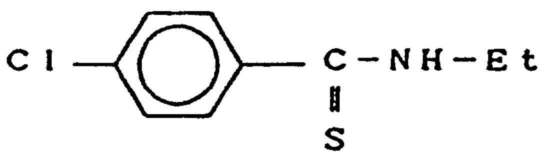

N-Äthylthio-p-chlorbenzamid

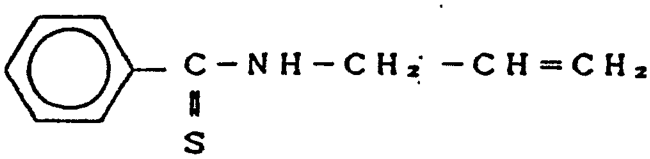

N-Propylenthiobenzamid

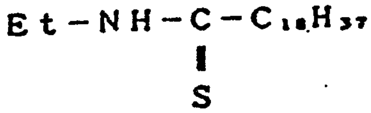

N-Äthylthiostearylamid

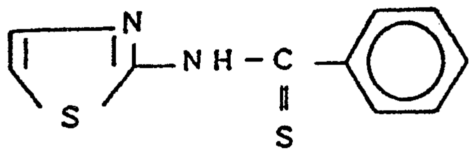

N-(2-Thiazolyl)thiobenzamid

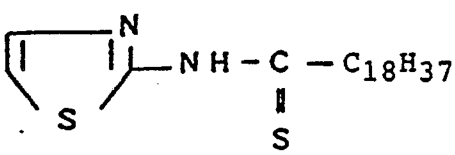

N-1-(2-Thiazolyl)thiostearylamid

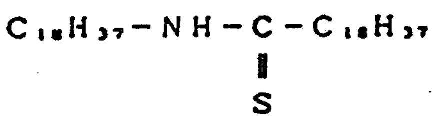

N-Stearylthiostearylamid

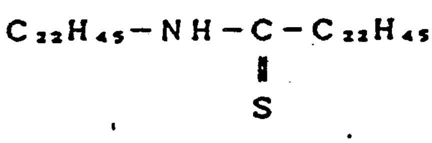

N-Behenylthiobehenylamid

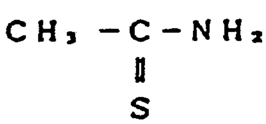

Thioacetamid

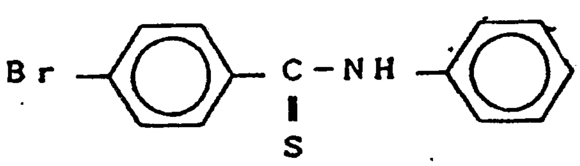

N-Phenyl-thio-p-brombenzamid

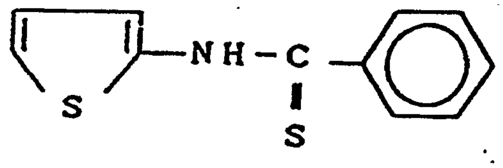

N-1-(2-Thienyl)thiobenzamid

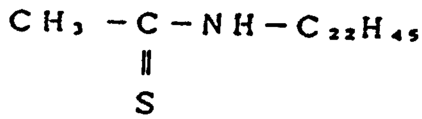

N-Behenylthioacetamid

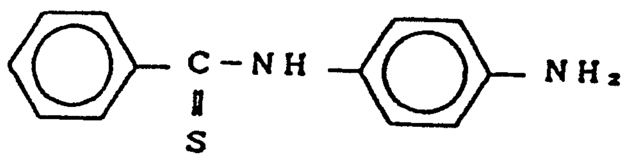

N-p-Aminophenylthiobenzamid

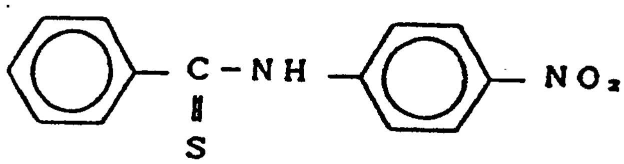

N-p-Nitrophenylthiobenzamid

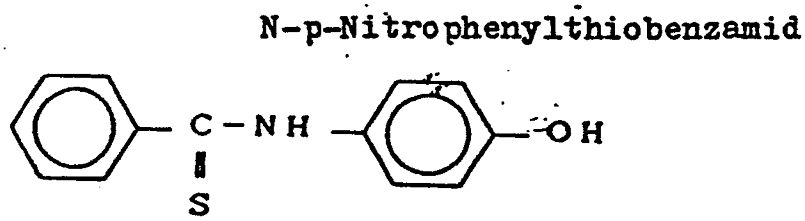

N-p-Hydroxyphenylthiobenzamid

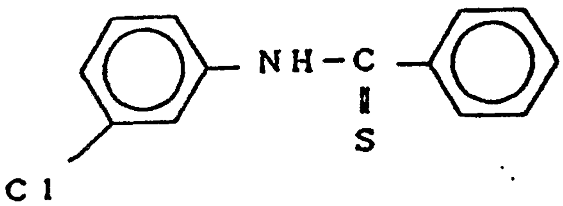

N-m-Chlorphenylthiobenzamid

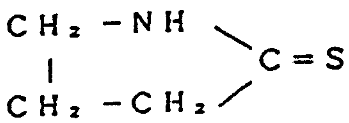

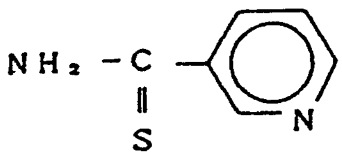

Thionikotinsäureamid

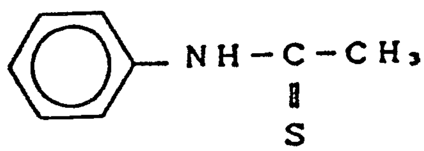

Thioacetanilid

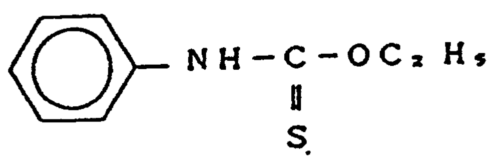

O-Äthyl-N-phenyl(thiocarbamat)

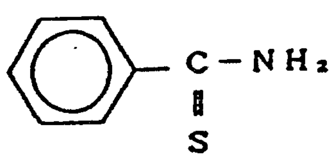

Thiobenzamid

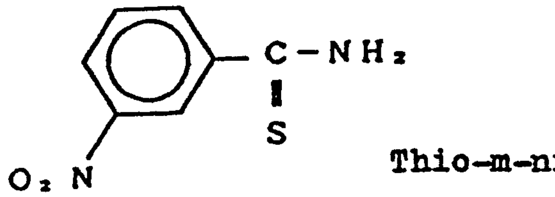

Thio-m-nitrobenzamid

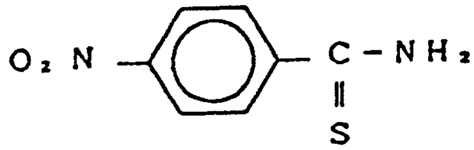

Thio-p-nitrobenzamid

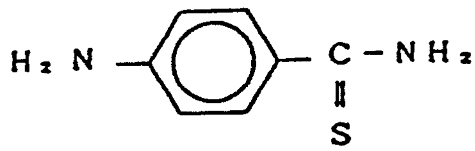

Thio-p-aminobenzamid

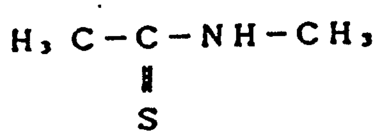

N-Methylthioacetamid

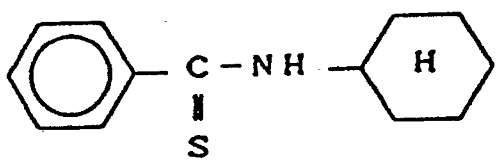

N-Cyclohexylthiobenzamid

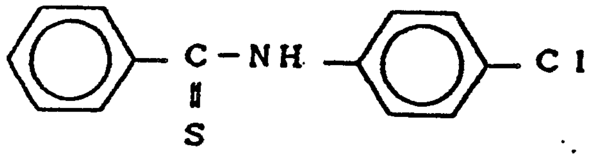

N-p-Chlorphenylthiobenzamid.

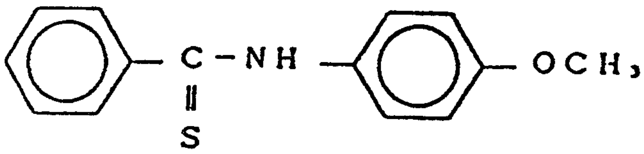

N-p-Methoxyphenylthiobenzamid

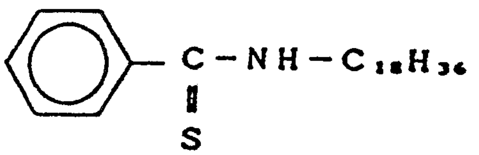

N-Stearylthiobenzamid

Die erfindungsgemäße Kupferverbindung ist eine Kupferverbindung der Formel (II)

$(R-X)_n Cu$ (II)

worin R ein Wasserstoffatom, eine Alkyl-, Cycloalkyl-, Aryl-, Aralkylgruppe oder ein heterocyclischer Rest ist (wobei jede Gruppe oder der Rest durch mindestens einen Substituenten substituiert sein kann), X -COO, $-SO_4$, $-SO_3$, $-PO_4$, oder -O bedeutet, und n eine ganze Zahl von 1 bis 4 ist.

Die Wahl der erfindungsgemäßen Kupferverbindungen der allgemeinen Formel (II) ist nicht besonders beschränkt, man kann z.B. folgende verwenden: Kupferstearat, Kupferpalmitat, Kupferoleat, Kupferbehenat, Kupferlaurat, Kupfercaprat, Kupfercapronat, Kupfervalerianat, Kupferisolaktat, Kupferlaktat, Kupferpropionat, Kupferacetat, Kupferformat, Kupferhydroxid, Kupferbenzoat, Kupfer-O-toluylat, Kupfer-m-toluylat, Kupfer-p-toluylat, Kupfer- p-tert.-butylbenzoat, Kupfer-o-chlorbenzoat, Kupfer-m-chlorbenzoat, Kupfer-p-chlorbenzoat, Kupferdichlorbenzoat, Kupfertrichlor benzoat, Kupfer-p-brombenzoat, Kupfer-p-jodbenzoat, Kupfer-p-phenylbenzoat, Kupfer-o-benzoylbenzoat, Kupfer-p-nitrobenzoat, Kupferanthranilat, Kupfer-p-aminobenzoat, Kupferoxalat, Kupfermalonat, Kupfersuccinat, Kupferglutarat, Kupferadipat, Kupferpimelat, Kupfersuberat, Kupferazelat, Kupfersebacinat, Kupferphthalat, Kupfermonoesterphthalat, Kupfernaphthenat, Kupfernaphthalincarbonat, Kupfertartarat, Kupferdiphenylamin-2-carboxylat, Kupfer-4-cyclohexyllaktat, Kupferdiäthyldithiocarbamat, Kupferglukonat, Diäthoxykupfer, Di-isopropoxykupfer, Di-n-butoxykupfer, Kupferoctylat, Kupferalkylbenzolsulfonat, Kupfer-p-toluolsulfonat, Kupfernaphthalinsulfonat, Kupfernaphthylaminsulfonat, Kupfer-n-dodecylbenzolsulfonat, Kupferdodecylsulfat, Kupfer-2,5-dimethylbenzolsulfonat, Kupfer-2-carbomethoxy-5-methylbenzolsulfonat, Kupfer-$\alpha$-naphthylphosphat, Kupferstearylphosphat, Kupferlaurylphosphat, Kupfer-di-2-äthylhexylphosphat, Kupferisodecylphosphat, und dergleichen.

Die erfindungsgemäße Bleiverbindung ist eine Bleiverbindung der Formel (III)

$(R-X)_n Pb$ (III)

worin R ein Wasserstoffatom, eine Alkyl-, Cycloalkyl-, Aryl-, Aralkylgruppe oder ein heterocyclischer Rest ist (wobei jede Gruppe oder der Rest durch mindestens einen Substituenten substituiert werden kann), X -COO, $-SO_4$, $-SO_3$, $-PO_4$, oder -O bedeutet, und n eine ganze Zahl von 1 bis 4 ist.

Die Wahl der erfindungsgemäßen Bleiverbindungen der allgemeinen Formel (II) ist nicht besonders beschränkt, man kann z.B. folgende verwenden: Bleistearat, Bleipalmitat, Bleioleat, Bleibehenat, Bleilaurat, Bleicaprat, Bleicapronat, Bleivalerianat, Bleiisolaktat, Bleilaktat, Bleipropionat, Bleiacetat, Bleiformat, Bleihydroxid, Bleibenzoat, Blei-o-toluylat, Blei-m-toluylat, Blei-p-toluylat, Blei-p-tert.-butylbenzoat, Blei-o-chlorbenzoat, Blei-m-chlorbenzoat, Blei-p-chlorbenzoat, Bleidichlorbenzoat, Bleitrichlor benzoat, Blei-p-brombenzoat, Blei-p-jodbenzoat, Blei-p-phenylbenzoat, Blei-o-benzoylbenzoat, Blei-p-nitrobenzoat, Bleianthranilat, Blei-p-aminobenzoat, Bleioxalat, Bleimalonat, Bleisuccinat, Bleiglutarat, Bleiadipat, Bleipimelat, Bleisuberat, Bleiazelat, Bleisebacinat, Bleiphthalat, Bleimonoesterphthalat, Bleinaphthenat, Bleinaphthalincarbonat, Bleitartarat, Bleidiphenylamin-2-carboxylat, Blei-4-cyclohexyllaktat, Bleidiäthyldithiocarbamat, Bleiglukonat, Diäthoxyblei, Di-isopropoxyblei, Di-n-butoxyblei, Bleioctylat, Bleialkylbenzolsulfonat, Blei-p-toluolsulfonat, Bleinaphthalinsulfonat, Bleinaphthylaminsulfonat, Blei-n-dodecylbenzolsulfonat, Bleidodecylsulfat, Blei-2,5-dimethylbenzolsulfonat, Blei-2-carbomethoxy-5-methylbenzolsulfonat, Blei-α-naphthylphosphat, Bleistearylphosphat, Bleilaurylphosphat, Blei-di-2-äthylhexylphosphat, Bleiisodecylphosphat, und dergleichen.

In den Formeln I, II und III können Alkyl, Alkenyl, Alkoxy etc. geradkettig oder verzweigt sein. Vorzugsweise steht Alkyl für $C_1$-$C_{30}$-Alkyl, insbesondere $C_1$-$C_{25}$-Alkyl. Beispiele sind Methyl, Ethyl, n- und i-Propyl, Butyl, Stearyl oder Behenyl.

Cycloalkyl steht vorzugsweise für Cyclopentyl oder Cyclohexyl.

Aryl bedeutet vorzugsweise Phenyl oder Naphthyl, Aralkyl steht vorzugsweise für Phenyl-$C_1$-$C_4$-Alkyl, wie Benzyl oder Phenylethyl.

Alkenyl steht vorzugsweise für $C_2$-$C_6$-Alkenyl, insbesondere $C_2$-$C_4$-Alkenyl.

Bei den heterocyclischen Resten handelt es sich vorzugsweise um 5- oder 6-gliedrige Ringe mit einem oder mehreren Sauerstoff-, Schwefel- oder Stickstoff-Heteroatomen, wie Thiazolyl, Thienyl, Furyl, Pyrrolidinyl, Pyrrolyl, Morpholinyl, Piperazinyl, Piperidinyl oder Pyridinyl. Wenn $R_1$ und $R_2$ oder $R_2$ und $R_3$ gemeinsam einen Ring bilden, stehen sie vorzugsweise für Ethylen, Propylen oder Butylen.

Bevorzugte Substituenten der in den Formeln I, II und III vorhandenen Reste sind geradkettiges oder verzweigtes $C_1$-$C_{18}$-Alkyl (wie Methyl, Ethyl, n- und i-Propyl, n-, i- und t-Butyl, Dodecyl etc.), $C_1$-$C_4$-Alkoxy, Hydroxy, Halogen (F, Cl, Br, J), Nitro, Amino, Phenyl, Cyclopentyl, Cyclohexyl, Benzoyl, Acetyl.

Entweder die obige Thioamidverbindung oder die obige Kupfer- oder Bleiverbindung absorbiert nahes IR-Licht fast nicht oder nur eine bestimmte Wellenlänge. Eine Hitzebehandlung der Thioamidverbindung oder der Kupfer- oder Bleiverbindung übt keinen Einfluß auf die Absorption im nahen IR aus. Aber das Gemisch aus dieser Thioamidverbindung und dieser Kupfer- und/oder Bleiverbindung nimmt nach seiner Hitzebehandlung nahes IR-Licht stark und gleichmäßig auf.

Ohne Hitzebehandlung nimmt das Gemisch aus einer Thioamidverbindung der allgemeinen Formel (I) und wenigstens einer Verbindung aus der Gruppe der Verbindungen der allgemeinen Formel (II), der Verbindungen der allgemeinen Formel (III), Kupfer-und Bleiacetylacetonate, Chlorophyll-Kupfer und -Blei und Chlorophyllin-Kupfer und -Blei fast kein nahes IR-Licht auf.

Wenn man die erfindungsgemäße Masse oder die diese Masse enthaltenden Formkörper vollständig oder teilweise (abschnittsweise) durch Zufuhr von Wärmeenergie behandelt, nimmt der erhitzte Teil das nahe IR-Licht stark auf. Der erhitzte Teil nimmt kein Licht im sichtbaren Wellenlängenbereich auf und produziert ein latentes Bild (eines durch Erhitzen erzeugten Musters).

Daher kann man unter der Verwendung des obigen Phänomens einen Detektor für das durch Erhitzen erzeugte Muster und in Kombination mit einem geeigneten Entwicklungsgerät ein Aufzeichnungspapier herstellen.

Weil das erfindungsgemäße Material, das durch die Hitzebehandlung der ein Gemisch aus Thioamidverbindung und aus Kupfer- und/oder Bleiverbindung enthaltenden Masse erhalten wird, das Licht im nahen IR-Bereich stark absorbiert, kann es Verwendung bei der Herstellung eines Detektors für nahes IR-Licht und bei der Herstellung der Mittel für das Aufzeichnungssystem des Laserstrahls finden.

Die Stärke der Absorption im nahen IR kann durch die Art und das Mischverhältnis von Thioamidverbindung und Kupfer- und/oder Bleiverbindung, Erhitzungstemperatur und -zeit usw. eingestellt werden.

Die erfindungsgemäße Masse wird hergestellt, indem man die Thioamidverbindung und die Kupfer- und/oder Bleiverbindung in einem geeigneten Mischungsverhältnis vermischt, oder indem man die Thioamidverbindung, die Kupfer- und/oder Bleiverbindung, ein Bindemittel, Zellstoff, Holzschliff, thermoplastisches Harzpulver usw. und gegebenenfalls Additive wie Farbstoffe usw. vermischt.

Weiter kann die erfindungsgemäße Masse hergestellt werden, indem man das Gemisch aus allen Rohstoffen in einem geeigneten Lösungsmittel oder einer geeigneten Dispersion auflöst, oder indem man alle Rohstoffe außer Bindemittel, Farbstoff, usw. in einem Lösungsmittel auflöst, in dem Bindemittel, Färbungsmittel, usw. dispergiert oder aufgelöst sind.

Die Masse kann beispielsweise eine Beschichtungsmasse, Füllstoff usw. sein. Das Mischverhältnis, der Massegehalt im Formkörper und die Zugabemenge anderer Stoffe werden so festgelegt, daß beim Erhitzen die Thioamidverbindung und die Kupfer- und/oder Bleiverbindung als Feststoffe oder als Schmelze oder als Gemisch aus Feststoff und Schmelze miteinander in Kontakt gebracht werden.

Der erfindungsgemäße Formkörper umfaßt eine erfindungsgemäße Masse, die die Thioamidverbindung und die Kupfer- und/oder Bleiverbindung enthält, oder ein im nahen IR absorbierendes Material, das durch die Hitzebehandlung der erfindungsgemäßen Masse erhalten wird. Das Verfahren zur Herstellung dieses Formkörpers erfolgt durch:

(a) Formen eines Gemisches aus den Formkörperrohstoffen, und der erfindungsgemäßen Masse oder dem erfindungsgemäßen im nahen IR absorbierenden Materiall oder

(b) Auftragen oder Imprägnieren eines dispergierten Schlamms der erfindungsgemäßen Masse oder des erfindungsgemäßen Materials mittels Zerstäubungs-, Streich- oder Druckmaschine auf den Förmkörperrohstoff.

Der Formkörper wird hergestellt, indem man aus Zellstoff, Bolzschliff, Faser, thermoplastischem Harz, usw. auf bekannte Weise, beispielsweise durch Weben, Blattbildung, Hitzeformierung usw. einen Film, ein Blatt oder eine Stange produziert und gegebenfalls weiter behandelt.

Das Hitzeverfahren zur Erzielung einer Absorptionsfähigkeit im nahen IR ist nicht besonders beschränkt. Alle Hitzeverfahren, die eine Übertragung von Wärmeenergie für die Erzielung der Absorptionsfähigkeit im nahen IR auf Grund der Reaktion der erfindungsgemäßen Thioamidverbindung mit der erfindungsgemäßen Kupfer- oder Bleiverbindung mit sich bringen, können erfindungsgemäß verwendet werden. Das Erhitzen kann beispielsweise mit Hilfe einer elektrischen Heizvorrichtung, Induktionsheizvorrichtung, Filmextruders usw., Thermokopfes, Halbleiterlasers, IR-Lampe und dergleichen, erfolgen.

Die Hitzebehandlung wird unter beliebiger Atmosphäre, beispielweise Luftatmosphäre, inerter Gasatmosphäre usw., üblicherweise unter Luftatmosphäre durchgeführt,

Die Erhitzungstemperatur liegt üblicherweise bei 40 - 400 °C, vorzugsweise bei 50 - 350 °C. Die Erhitzungszeit ist im Bereich von einigen Millisekunden bis zu einigen Zehnminuten.

Eine gleichmäßige Vermischung durch einen Mischer,z.B. Quirl, durch Umrühren und Schwenken ist bevorzugt, weil dies wegen der zunehmenden Berührungshäufigkeit der Materialien zu einer einheitlichen Wärmeübertragung und großen Reaktionsgeschwindigkeit führt.

Das Mischverhältnis von Thioamidverbindung, Kupfer- und/oder Bleiverbindung ist je nach der Art dieser Verbindungen verschieden, aber 0.01 - 50 Gew.-Teile, vorzugsweise 0,1 - 10 Gew.-Teile der Thioamidverbindung, bezogen auf 1 Gew.-Teil der Kupfer- und/oder Bleiverbindung, werden im allgemeinen verwendet.

Wie oben erwähnt wurde, nimmt das Gemisch aus der Thioamidverbindung der allgemeinen Formel (I) und aus mindestens einer Verbindung aus der Gruppe Kupfer-und Bleihydroxid, Kupferverbindung der allgemeinen Formel (II), Bleiverbindung der allgemeinen Formel (III), Kupfer- und Bleiacetylacetonat, Chlorophyll-Kupfer und -Blei, und Chlorophyllin-Kupfer und -Blei nach Hitzebehandlung nahes IR-Licht gleichmäßig im ganzen Bereich von 700 -2000 nm auf. Die Ursache für die obige Tatsache ist nicht klar.

Wie aus folgenden Beispielen und Vergleichsbeispielen ersichtlich ist, nimmt weder die Thioamidverbindung noch die obige Kupfer- und/oder Bleiverbindung nach Hitzebehandlung nahes IR-Licht stark und gleichmäßig im ganzen Bereich von 700 - 2000 nm auf. Das Gemisch aus der Thioamidverbindung der allgemeinen Formel (I) und der obigen Kupfer-und/oder Bleiverbindung ohne Hitzebehandlung nimmt ebenfalls kein nahes IR-Licht stark und gleichmäßig auf. Daher vermutet man, daß bei der Hitzebehandlung des Gemisches eine Reaktion zwischen der Thioamidverbindung der allgemeinen Formel (I) und der obigen Kupfer- und/oder Bleiverbindung auftritt, wodurch ein Komplex gebildet wird.

Die Erfindung wird durch folgende Beispiele erläutert. Als Abkürzung für Gewichtsteile wird "Teile" verwendet.

[Beispiel 1]

Die Thioamidverbindungen und Kupferverbindungen der Nrn. 1, 3 und 5 der der Tabelle 1 wurden in einer Reibmühle bis zur Teilchengröße von ungefähr 3 µ naß vermahlen.

| Lösung A | |
|---|---|
| Thioamidverbindung von Nr. 1, 3 oder 5 | 20 Teile |
| 10%-ige wäßrige Lösung von Polyvinylalkohol | 50 Teile |
| Wasser | 30 Teile |
| Gesamt | 100 Teile |

| Lösung B | |
|---|---|
| Kupferverbindung von Nr. 1, 3 oder 5 | 20 Teile |
| 10%-ige wäßrige Lösung von Polyvinylalkohol | 50 Teile |
| Wasser | 30 Teile |
| Gesamt | 100 Teile |

50 Teile der Lösung A und 50 Teile der Lösung B wurden miteinander vermischt, um eine Beschichtungsmasse herzustellen.

Diese Beschichtungsmasse wurde in einer Beschichtungsmenge von 5 g/$m^2$ auf ein hochklassiges Papier mit einem Gewicht von 60 g/$m^2$ mittels des Meyerbargeräts aufgetragen und getrocknet. Man erhielt ein Aufzeichnungsblatt. Alle erhaltenen Aufzeichnungsblätter sind weiß bis blaßblau, und färben sich blaßgrünlich bei der Berührung mit einer Metallplatte von einer Oberflächentemperatur von 150 °C während 5 Sekunden. Bei jedem gefärbten Teil sind die Absorptionswerte des nahen IR-Lichtes bei 800, 900, 1000, 1500 und 2000 nm Wellenlänge durchschnittlich mehr als 80%, und sie sind daher hoch.

Der wärmeempfindliche Druck erfolgte durch einen wärmeempfindlichen Drucker für Strichcode-Zettel (BW-100T, hergestellt von Mekano System Co., Ltd.). In jedem Fall wurde ein blaßgrünes Strichcode-Muster auf jedes der Blätter gedruckt.

Dieses Muster ist lesbar mittels eines Lesers für Strichcode-Zettel (MS-Ba-Dec 230, hergestellt von Mekano System Co., Ltd.), bei dem das Licht eines Halbleiterlasers als Leselichtquelle verwendet wurde.

[Beispiel 2]

Auf Basis der Kombinationen Nr. 1 - 23 in der Tabelle 1 wurden 5 Teile einer Thioamidverbindung und 5 Teile einer Kupferverbindung in einem Porzellantiegel vermischt. 10 Teile des Gemisches wurden während 15 Sekunden bei 150 °C in einem elektrischen Ofen hitzebehandelt.

Das erhaltene, blaßfarbige Pulverprodukt wurde in einer bestimmten Dicke auf einem hochklassigen Papier fixiert.

Der Reflexionsgrad der Oberfläche wurde mit dem Spektrophotometer (UVID EC-590, hergestellt von Japan Spectroscopic Co., Ltd.) in bezug auf das Reflexionsspektrum des nahen IR-Bereiches im Wellenlängenbereich von 800 - 2500 nm gemessen.

Die Absorptionsfähigkeit im nahen IR wird als Durchschnittswert der Absorptionswerte dargestellt, wobei dieser Absorptionswert der Unterschied zwischen 100% und dem Reflexionsgrad bei ,der Wellenlänge von 800, 900, 1000, 1500 und 2000 nm ist. Dabei zeigt ◎ einen Durchschnittswert von wenigstens 80%, ○ einen Durchschnittswert von wenigstens 60%, △ einen Durchschnittwert von wenigstens 30%, und X einen Durchschnittswert von weniger als 30%.

Das Material mit einem Durchschnittswert von wenigstens 30% bedeutet ein erfindungsgemäßes im nahen IR absorbierendes Material. Die nahen IR-Absorptionsfähigkeiten der erfindungsgemäßen Materialien in Nrn. 1 - 23 der Tabelle 1 zeigen einen Durchschnittswert von wenigstens 60%.

[Vergleichsbeispiel 1]

Jede der Thioamidverbindungen oder jede der Kupferverbindungen in der Tabelle 2 wurde unter den gleichen Bedingungen wie im Beispiel 2 hitzebehandelt, und auf die Herstellung des Produktes angewandt. Das nahe IR-Reflexionsspektrum eines erhaltenen Produktes wurde gemessen, und die nahe IR-Absorptionsfähigkeit wurde in gleicher Weise wie im Beispiel 2 bewertet. Alle Absorptionsfähigkeiten im nahen IR sind weniger als 30%, wie es aus der Tabelle 2 ersichtlich ist.

Die Änderung der Absorptionsfähigkeit im nahen IR bei der getrennten Hitzebehandlung der einzelnen Komponenten, der Mischung ohne Hitzebehandlung, und der Mischung aus einer erfindungsgemäßen Thioamidverbindung und einer erfindungsgemäßen Kupferverbindung nach Hitzebehandlung ist in Abbildung 1 erläutert. In der Abbildung 1 werden als Thioamidverbindung N-Phenylthiobenzamid und als Kupferverbindung Kupfer-p-chlorbenzoat verwendet.

Nr. 1 und Nr. 4 des Vergleichsbeispiels 1 (getrennte Hitzebehandlung),Nr. 1 des Beispiels 1 (Mischung ohne Hitzebehandlung) und Nr. 1 des Beispiels 2 (Hitzebehandlung der Mischung) werden in bezug auf die nahen IR-Reflexionsspektra im Bereich von 800 - 2000 nm verglichen.

Aus der Abbildung 1 ist ersichtlich, daß die Absorptionsfähigkeit des erhitzten Gemisches aus N-phenylthiobenzamid und Kupfer-p-chlorbenzoat (bei Nr. 1 des Beispiels 2) im nahen IR erheblich höher ist als diejenge der getrennt erhitzten Komponenten oder als diejenige der Mischung ohne Hitzebehandlung; das heißt, daß die nahe IR-Absorptionsfähigkeit von Nr. 1 des Beispiels 2 mehr als 90% im ganzen Meßwellenlängenbereich ist.

[Beispiel 3]

Mit jeder der Thioamidverbindungen und Kupferverbindungen der Nrn. 24 - 32 der Tabelle 3 wurden folgende Zusammensetzungen zubereitet:

| Lösung A | |
|---|---|
| Thioamidverbindung | 50 Teile |
| 10%-ige wäßrige Lösung von Polyvinylalkohol | 25 Teile |
| Wasser | 125 Teile |

| Lösung B | |
|---|---|
| Kupferverbindung | 50 Teile |
| 10%-ige wäßrige Lösung von Polyvinylalkohol | 25 Teile |
| Wasser | 125 Teile |

Die Lösungen der obigen Zusammensetzungen wurden in einer Reibmühle einzeln bis zur Teilchengröße von 1 Mikron vermahlen. Die Lösungen wurden in dem in der Tabelle 3 angegebenen Verhältnis miteinander vermischt, um eine Beschichtungsmasse zu erhalten. Die erhaltene Beschichtungsmasse wurde in einer Beschichtungsmenge von 3,0 $g/m^2$ (Feststoffgehalt) auf ein hochklassiges Papier von 50 $g/m^2$ aufgetragen und getrocknet, um ein Aufzeichnungsblatt zu erhalten.

Dieses Aufzeichnungsblatt wurde 5 Sekunden unter einem Druck von 10 g/m2 gegen eine auf 150° C erhitzte Platte gepreßt (hitzebehandelt). Man erhielt ein im nahen IR absorbierendes Aufzeichnungsblatt.

Die Absorptionsfähigkeit des erhaltenen Aufzeichnungsblattes wurde in der gleichen Weise wie im Beispiel 2 gemessen, und die Hintergrundfarbe der Beschichtungsoberfläche und die Beständigkeit der IR-Absorptionsfähigkeit gegenüber Hitze, Feuchtigkeit, und Licht wurde wie folgt bestimmt, und die Ergebnisse sind in der Tabelle 3 zusammengefaßt.

[Anmerkungen]

Hintergrundfarbe

Der Reflexionsgrad der Beschichtungsoberfläche nach der Hitzebehandlung wird mit einem Macbeth-Dichtemesser (RD-914, Verwendung des Amber-Filters) gemessen.

Hitzebeständigkeit

Ein Blatt wird 24 Stunden im Ofen bei 60° C belassen. Dann wird der IR-Reflexionsgrad des Blattes mit einem Spectrophotometer (bei einer Wellenlänge von 1000 nm) gemessen.

Die Beständigkeit gegenüber Hitze wird als Restprozentsatz der nahen IR-Absorptionsfähigkeit durch folgende Formel bewertet.

$$\text{Restprozent} = \frac{100 - \text{Reflexionsgrad nach Hitzebehandlung}}{100 - \text{Reflexionsgrad vor Hitzebehandlung}} \times 100\ (\%)$$

Beständigkeit gegenüber Luftfeuchtigkeit

Ein Blatt wird bei 40 °C und 90% relativer Luftfeuchtigkeit stehengelassen. Nach 24 Stunden wird der IR-Reflexionsgrad des Blattes mit einem Spektrophotometer (bei einer Wellenlänge von 1000 nm) gemessen. Die Beständigkeit gegenüber Luftfeuchtigkeit wird als Restprozentsatz der nahen IR-Absorptionsfähigkeit durch folgende Formel bewertet.

$$\text{Restprozent} = \frac{100 - \text{Reflexionsgrad nach feuchter Lagerung}}{100 - \text{Reflexionsgrad vor feuchter Lagerung}} \times 100\ (\%)$$

Lichtbeständigkeit

Ein Blatt wird 6 Stunden mit dem Licht eines Fade-O-Meters bestrahlt. Der IR-Reflexionsgrad des Blattes wird mit einem Spektrophotometer (bei einer Wellenlänge von 1000 nm) gemessen. Die Beständigkeit gegenüber Licht wird als Restprozentsatz der nahen IR-Absorptionsfähigkeit durch folgende Formel bewertet.

$$\text{Restprozent} = \frac{100 - \text{Reflexionsgrad nach Lichtbestrahlung}}{100 - \text{Reflexionsgrad nach Lichtbestrahlung}} \times 100\ (\%)$$

[Vergleichsbeispiel 2]

Die die Thioamidverbindung enthaltende Dispersion A oder die die Kupferverbindung enthaltende Dispersion B, die im Beispiel 3 verwendet wurden, wurde auf die gleiche Weise wie im Beispiel 3 getrennt aufgetragen, getrocknet und dann hitzebehandelt, um ein Produkt zu herzustellen. Die nahe IR-Absorptionsfähigkeit des Produktes wurde gemessen.

Bei den Blättern, auf die ein Gemisch aus der erfindungsgemäßen Thioamidverbindung und der erfindungsgemäßen Kupferverbindung aufgetragen und die getrocknet wurden, führt eine Hitzebehandlung zu einem Blatt mit einer hohen Absorptionsfähigkeit im nahen IR,wie aus Tabelle3 ersichtlich ist. Diese hohe IR-Absorptionsfähigkeit wird unter der Einwirkung von Hitze, Feuchtigkeit und Licht fast nicht erniedrigt und sie ist erstaunlich stabil gegenüber der Handhabung und der Änderung der Umweltsbedingungen. Die Oberfläche dieses Blattes färbt sich etwas ins Graue, wodurch das Blatt aber keine auffallende Farbveränderung erfährt. Das Blatt, auf das entweder die Thioamidverbindung oder die Kupferverbindung aufgetragen und das getrocknet wurde, weist bei der Hitzebehandlung keine nahe IR-Absorptionsfähigkeit auf, und es wurde daher hinsichtlich der Stabilität der IR-Absorptionsfähigkeit während der Lagerung nicht geprüft.

Tabelle 1

| | Thioamidverbindung | Kupferverbindung | Mischverhältnis | Nahe IR-Absorptionsfähigkeit | Hitzebehandlung |
|---|---|---|---|---|---|
| Nr.1 | N-Phenylthiobenzamid | Kupfer-p-chlorbenzoat | 1:1 | ◎ | Hitzebehandlung |
| Nr.2 | N-Cyclohexylthiobenzamid | Kupfer-p-chlorbenzoat | 1:1 | ◎ | Hitzebehandlung |
| Nr.3 | N-Stearylthiobenzamid | Kupfer-p-chlorbenzoat | 1:1 | ◎ | Hitzebehandlung |
| Nr.4 | Thioacetanilid | Kupfer-p-chlorbenzoat | 1:1 | ◎ | Hitzebehandlung |
| Nr.5 | Thionicotinsäureamid | Kupfer-p-chlorbenzoat | 1:1 | ◎ | Hitzebehandlung |
| Nr.6 | N-Phenylthiobenzamid | Kupferstearat | 1:1 | ◎ | Hitzebehandlung |
| Nr.7 | N-Phenylthiobenzamid | Kupferbehenat | 1:1 | ◎ | Hitzebehandlung |
| Nr.8 | N-Phenylthiobenzamid | Kupfer-p-nitrobenzoat | 1:1 | ◎ | Hitzebehandlung |
| Nr.9 | N-Phenylthiobenzamid + Thioacetanilid | Kupfer-m-clorbenzoat | (0.5:0.5):1 | ◎ | Hitzebehandlung |
| Nr.10 | N-Phenylthiobenzamid | Kupfer-p-brombenzoat | 1:1 | ◎ | Hitzebehandlung |
| Nr.11 | N-Phenylthiobenzamid | Kupferbenzoat | 1:1 | ○ | Hitzebehandlung |
| Nr.12 | N-Phenylthiobenzamid | Kupfer-o-benzoylbenzoat | 1:1 | ○ | Hitzebehandlung |
| Nr.13 | N-Phenylthiobenzamid | Chlorophyll-Kupfer | 1:1 | ○ | Hitzebehandlung |
| Nr.14 | N-Phenylthiobenzamid | Kupferglukonat | 1:1 | ○ | Hitzebehandlung |
| Nr.15 | N-Phenylthiobenzamid | Kupfer-4-cyclohexyllaktat | 1:1 | ○ | Hitzebehandlung |
| Nr.16 | N-Phenylthiobenzamid | Kupfer-n-dodecylbenzolsulfonat | 1:1 | ○ | Hitzebehandlung |
| Nr.17 | N-Phenylthiobenzamid | Kupfernaphthalinsulfonat | 1:1 | ○ | Hitzebehandlung |
| Nr.18 | N-Phenylthiobenzamid | Kupfer-α-naphthylphosphat | 1:1 | ○ | Hitzebehandlung |
| Nr.19 | N-Phenylthiobenzamid | Kupferstearat + Kupfer-p-chlorbenzoat | 1:(0.5:0.5) | ○ | Hitzebehandlung |
| Nr.20 | N-Phenylthiobenzamid | Kupferstearylphosphat | 1:1 | ○ | Hitzebehandlung |
| Nr.21 | N-Phenylthiobenzamid | Kupferacetat | 1:1 | ○ | Hitzebehandlung |
| Nr.22 | N-Phenylthiobenzamid | Kupfersuccinat | 1:1 | ○ | Hitzebehandlung |
| Nr.23 | N-Phenylthiobenzamid | Kupferglutarat | 1:1 | ○ | Hitzebehandlung |

Tabelle 2

| | Thioamidverbindung | Kupferverbindung | Mischverhältnis | Nahe IR-Absorptionsfähigkeit | Hitzebehandlung |
|---|---|---|---|---|---|
| Nr.1 | N-Phenylthiobenzamid | - | 1:0 | X | Hitzebehandlung |
| Nr.2 | N-Cyclohexylthiobenzamid | - | 1:0 | X | Hitzebehandlung |
| Nr.3 | N-Stearylthiobenzamid | - | 1:0 | X | Hitzebehandlung |
| Nr.4 | - | Kupfer-p-chlorbenzoat | 0:1 | X | Hitzebehandlung |
| Nr.5 | - | Kupferbehenat | 0:1 | X | Hitzebehandlung |
| Nr.6 | - | Kupferstearat | 0:1 | X | Hitzebehandlung |

Tabelle 3

| | Thioamidverbindung | Kupferverbindung | Mischverhältnis | Hintergründfarbe | Nahe IR-Absorptionsfähigkeit | Beständigkeit gegenüber | | |
|---|---|---|---|---|---|---|---|---|
| | | | | | | Hitze | Luftfeuchtegkeit | Licht |
| Nr.24 | N-Phenylthiobenzamid | Kupfer-p-chlorbenzoat | 1:1 | 0.25 | ◎ | 97 | 95 | 98 |
| Nr.25 | N-Phenylthiobenzamid | Kupfer-p-chlorbenzoat | 0.5:1 | 0.26 | ◎ | 96 | 95 | 97 |
| Nr.26 | N-Phenylthiobenzamid | Kupfer-p-chlorbenzoat | 1:0.5 | 0.24 | ◎ | 95 | 92 | 94 |
| Nr.27 | N-Cyclohexylthiobenzamid | Kupfer-p-chlorbenzoat | 1:1 | 0.23 | ◎ | 97 | 95 | 99 |
| Nr.28 | N-Cyclohexylthiobenzamid | Kupferbehenat | 0.5:1 | 0.24 | ◎ | 96 | 96 | 98 |
| Nr.29 | N-Cyclohexylthiobenzamid | Kupfer-p-chlorbenzoat | 1:0.5 | 0.21 | ◎ | 95 | 94 | 94 |
| Nr.30 | N-Stearylthiobenzamid | Kupfer-p-chlorbenzoat | 1:1 | 0.25 | ◎ | 94 | 93 | 97 |
| Nr.31 | N-Stearylthiobenzamid | Kupfer-p-chlorbenzoat | 0.5:1 | 0.29 | ◎ | 93 | 92 | 94 |
| Nr.32 | N-Stearylthiobenzamid | Kupfer-p-chlorbenzoat | 1:0.5 | 0.25 | ◎ | 95 | 93 | 93 |
| Nr.8 | N-Phenylthiobenzamid | - | 1:0 | 0.08 | X | | | |
| Nr.9 | - | Kupfer-p-chlorbenzoat | 0:1 | 0.28 | X | | | |
| Nr.10 | N-Cyclohexylthiobenzamid | - | 1:0 | 0.07 | X | | | |
| Nr.11 | N-Stearylthiobenzamid | - | 1:0 | 0.08 | X | | | |

[Beispiel 4]

Jede der Thioamidverbindungen und der Bleiverbindungen, die in Nrn. 1, 3 und 5 der Tabelle 4 beschrieben wurden, wurde in einer Reibmühle bis zur Teilchengröße von ungefähr 3 μ naß vermahlen.

| Lösung A | |
|---|---|
| Thioamidverbindung von Nr. 1, 3 oder 5 | 20 Teile |
| 10%-ige wäßrige Lösung von Polyvinylalkohol | 50 Teile |
| Wasser | 30 Teile |
| Gesamt | 100 Teile |

| Lösung B | |
|---|---|
| Bleiverbindung von Nr. 1, 3 oder 5 | 20 Teile |
| 10%-ige wäßrige Lösung von Polyvinylalkohol | 50 Teile |
| Wasser | 30 Teile |
| Gesamt | 100 Teile |

50 Teile der Lösung A und 50 Teile der Lösung B wurden miteinander vermischt, um eine Beschichtungsmasse herzustellen.

Diese Beschichtungsmasse wurde in einer Beschichtungsmenge von 5 $g/m^2$ auf ein hochklassiges Papier mit einem Gewicht von 60 $g/m^2$ mittels des Meyerbargeräts aufgetragen und getrocknet. Man erhielt ein Aufzeichnungsblatt. Alle erhaltenen Aufzeichnungsblätter sind weiß bis blaßblau, und färben sich blaßgrünlich bei der Berührung mit einer Metallplatte von einer Oberflächentemperatur von 150 °C während 5 Sekunden. Bei jedem gefärbten Teil sind die Absorptionswerte des nahen IR-Lichtes bei 800, 900, 1000, 1500 und 2000 nm Wellenlänge durchschnittlich mehr als 80%, und sie sind daher hoch.

Der wärmeempfindliche Druck erfolgte durch einen wärmeempfindlichen Drucker für Strichcode-Zettel (BW-100T, hergestellt von Mekano System Co., Ltd.). In jedem Fall wurde ein blaßgrünes Strichcode-Muster auf jedes der Blätter gedruckt.

Dieses Muster ist lesbar mittels eines Lesers für Strichcode-Zittel (MS-Ba-Dec 230, hergestellt von Mekano System Co., Ltd.), bei dem das Licht eines Halbleiterlasers als Leselichtquelle verwendet wurde.

[Beispiel 5]

Auf Basis der Kombinationen Nr. 1 - 23 in der Tabelle 4 wurden 5 Teile einer Thioamidverbindung und 5 Teile einer Bleiverbindung in einem Porzellantiegel vermischt. 10 Teile des Gemisches wurden während 15 Minuten bei 150 °C in einem elektrischen Ofen hitzebehandelt.

Das erhaltene, blaßfarbige Pulverprodukt wurde in einer bestimmten Dicke auf einem hochklassigen Papier fixiert.

Der Reflexionsgrad der Oberfläche wurde in der gleichen Weise wie im Beispiel 2 gemessen.

Die nahe IR-Absorptionsfähigkeit wird in der gleichen Weise wie im Beispiel 2 dargestellt. Die nahen IR-Absorptionsfähigkeiten der erfindungsgemäßen Materialien in Nrn. 1 - 23 der Tabelle 4 zeigen einen Durchschnittswert von wenigstens 60%.

[Vergleichsbeispiel 3]

Jede der Thioamidverbindungen oder jede der Bleiverbindungen in der Tabelle 5 wurde unter den gleichen Bedingungen wie im Beispiel 5 hitzebehandelt, und auf die Herstellung des Produktes angewandt.

Das nahe IR-Reflexionsspektrum eines erhaltenen Produktes wurde gemessen, und die nahe IR-Absorptionsfähigkeit wurde in gleicher Weise wie im Beispiel 5 bewertet. Alle Absorptionsfähigkeiten im nahen IR sind weniger als 30%, wie es aus der Tabelle 5 ersichtlich ist.

Die Änderung der Absorptionsfähigkeit, im nahen IR bei der getrennten Hitzebehandlung der einzelnen Komponenten, der Mischung ohne Hitzebehandlung, und der Mischung aus einer erfindungsgemäßen Thioamidverbindung und einer erfindungsgemäßen Bleiverbindung nach Hitzebehandlung ist in Abbildung 2 erläutert. In der Abbildung 2 werden als Thioamidverbindung N-Phenylthiobenzamid und als Bleiverbindung Blei-p-chlorbenzoat verwendet Nr. 1 und Nr. 4 des Vergleichsbeispiels 3 (getrennte Hitzebehandlung) Nr. 1 des Beispiels 4 (Mischung ohne Hitzebehandlung) und Nr. 1 des Beispiels 5 (Hitzebehandlung der Mischung)werden in bezug auf die nahen IR-Reflexionsspektra im Bereich von 800 - 2000 nm verglichen.

Aus der Abbildung 2 ist ersichtlich, daß die Absorptionsfähigkeit von Nr. 1 des Beispiels 5 im nahen IR beim erhitzten Gemisch aus N-Phenylthiobenzamid und Blei-p-chlorbenzoat erheblich höher ist als diejenige der getrennt erhitzten Komponenten oder als diejenige der Mischung ohne Hitzebehandlung; das heißt, daß die nahe IR-Absorptionsfähigkeit von Nr. 1 des Beispiels 5 mehr als 90% im ganzen Meßwellenlängenbereich ist.

[Beispiel 6]

Mit jeder der Thioamidverbindungen und Bleiverbindungen, der Nrn. 24 - 32 der Tabelle 6 wurden folgende Zusammensetzungen zubereitet.

| Lösung A | |
|---|---|
| Thioamidverbindung<br>10%-ige wäßrige Lösung von Polyvinylalkohol<br>Wasser | 50 Teile<br>25 Teile<br>125 Teile |

| Lösung B | |
|---|---|
| Bleiverbindung<br>10%-ige wäßrige Lösung von Polyvinylalkohol<br>Wasser | 50 Teile<br>25 Teile<br>125 Teile |

Die Lösungen der obigen Zusammensetzungen wurden in einer Reibmühle einzeln bis zur Teilchengröße von 1 Mikron vermahlen. Die Lösungen wurden in dem in Tabelle 6 angegebenen Verhältnis miteinander vermischt, um eine Beschichtungsmasse zu erhalten. Die erhaltene Beschichtungsmasse wurde in einer Beschichtungsmenge von 3,0 $g/m^2$ (Feststoffgehalt) auf ein hochklassiges Papier von 50 $g/m^2$ aufgetragen und getrocknet, um ein Aufzeichnungsblatt zu erhalten.

Dieses Aufzeichnungsblatt wurde 5 Sekunden unter einem Druck von 10 g/m2 gegen eine auf 150 °C erhitzte Platte gepreßt (hitzebehandelt). Man erhielt ein im nahen IR absorbierendes Aufzeichnungsblatt.

Die Absorptionsfähigkeit des erhaltenen Aufzeichnungsblattes, die Hintergrundfarbe der Beschichtungsoberfläche und die Beständigkeit der IR-Absorptionsfähigkeit gegenüber Wärme, Feuchtigkeit, und Licht wurden in der gleichen Weise wie im Beispiel 3 bestimmt, und die Ergebnisse sind in der Tabelle 6 zusammengefaßt.

[Vergleichsbeispiel 4]

Die die Thioamidverbindung, enthaltende Dispersion A oder die die Bleiverbindung enthaltende Dispersion B, die im Beispiel 6 verwendet wurden, wurde auf die gleiche Weise wie im Beispiel 6 getrennt aufgetragen, getrocknet und dann hitzebehandelt, um ein Produkt zu herzustellen. Die nahe IR-Absorptionsfähigkeit des Produktes wurde gemessen.

Bei den Blättern, auf die ein Gemisch aus der erfindungsgemäßen Thioamidverbindung und der

erfindungsgemäßen Bleiverbindung aufgetragen und die getrocknet wurden, führt eine Hitzebehandlung zu einem Blatt mit einer hohen Absorptionsfähigkeit im nahen IR,wie aus Tabelle6ersichtlich ist. Diese hohe IR-Absorptionsfähigkeit wird unter der Einwirkung von Hitze, Feuchtigkeit und Licht fast nicht erniedrigt und sie ist erstaunlich stabil gegenüber der Handhabung und der Änderung der Umweltsbedingungen. Die Oberfläche dieses Blattes färbt sich etwas ins Graue, wodurch das Blatt aber keine auffallende Farbveränderung erfährt. Das Blatt, auf das entweder die Thioamidverbindung oder die Bleiverbindung aufgetragen und das getrocknet wurde, weist bei der Hitzebehandlung keine nahe IR-Absorptionsfähigkeit auf, und es wurde daher hinsichtlich der Stabilität der

IR-Absorptionsfähigkeit während der Lagerung nicht geprüft.

Tabelle 4

| | Thioamidverbindung | Bleiverbindung | Mischverhältnis | Nahe IR-Absorptionsfähigkeit | Hitzebehandlung |
|---|---|---|---|---|---|
| Nr.1 | N-Phenylthiobenzamid | Blei-p-chlorbenzoat | 1:1 | ◎ | Hitzebehandlung |
| Nr.2 | N-Cyclohexylthiobenzamid | Blei-p-chlorbenzoat | 1:1 | ◎ | Hitzebehandlung |
| Nr.3 | N-Stearylthiobenzamid | Blei-p-chlorbenzoat | 1:1 | ◎ | Hitzebehandlung |
| Nr.4 | Thioacetanilid | Blei-p-chlorbenzoat | 1:1 | ◎ | Hitzebehandlung |
| Nr.5 | Thionicotinsäureamid | Blei-p-chlorbenzoat | 1:1 | ◎ | Hitzebehandlung |
| Nr.6 | N-Phenylthiobenzamid | Bleistearat | 1:1 | ◎ | Hitzebehandlung |
| Nr.7 | N-Phenylthiobenzamid | Bleibehenat | 1:1 | ◎ | Hitzebehandlung |
| Nr.8 | N-Phenylthiobenzamid | Blei-p-nitrobenzoat | 1:1 | ◎ | Hitzebehandlung |
| Nr.9 | N-Phenylthiobenzamid + Thioacetanilid | Blei-m-clorbenzoat | (0.5:0.5):1 | ◎ | Hitzebehandlung |
| Nr.10 | N-Phenylthiobenzamid | Blei-p-brombenzoat | 1:1 | ◎ | Hitzebehandlung |
| Nr.11 | N-Phenylthiobenzamid | Bleibenzoat | 1:1 | ○ | Hitzebehandlung |
| Nr.12 | N-Phenylthiobenzamid | Blei-o-benzoylbenzoat | 1:1 | ○ | Hitzebehandlung |
| Nr.13 | N-Phenylthiobenzamid | Chlorophyll-Blei | 1:1 | ○ | Hitzebehandlung |
| Nr.14 | N-Phenylthiobenzamid | Bleiglukonat | 1:1 | ○ | Hitzebehandlung |
| Nr.15 | N-Phenylthiobenzamid | Blei-4-cyclohexyllaktat | 1:1 | ○ | Hitzebehandlung |
| Nr.16 | N-Phenylthiobenzamid | Blei-n-dodecylbenzolsulfonat | 1:1 | ○ | Hitzebehandlung |
| Nr.17 | N-Phenylthiobenzamid | Bleinaphthalinsulfonat | 1:1 | ○ | Hitzebehandlung |
| Nr.18 | N-Phenylthiobenzamid | Blei-α-naphthylphosphat | 1:1 | ○ | Hitzebehandlung |
| Nr.19 | N-Phenylthiobenzamid | Bleistearat + Blei-p-chlorbenzoat | 1:(0.5:0.5) | ○ | Hitzebehandlung |
| Nr.20 | N-Phenylthiobenzamid | Bleistearylphosphat | 1:1 | ○ | Hitzebehandlung |
| Nr.21 | N-Phenylthiobenzamid | Bleiacetat | 1:1 | ○ | Hitzebehandlung |
| Nr.22 | N-Phenylthiobenzamid | Bleisuccinat | 1:1 | ○ | Hitzebehandlung |
| Nr.23 | N-Phenylthiobenzamid | Bleiglutarat | 1:1 | ○ | Hitzebehandlung |

Tabelle 5

| | Thioamidverbindung | Bleiverbindung | Mischverhältnis | Nahe IR-Absorptionsfähigkeit | Hitzebehandlung |
|---|---|---|---|---|---|
| Nr.1 | N-Phenylthiobenzamid | - | 1:0 | X | Hitzebehandlung |
| Nr.2 | N-Cyclohexylthiobenzamid | - | 1:0 | X | Hitzebehandlung |
| Nr.3 | N-Stearylthiobenzamid | - | 1:0 | X | Hitzebehandlung |
| Nr.4 | - | Blei-p-chlorbenzoat | 0:1 | X | Hitzebehandlung |
| Nr.5 | - | Bleibehenat | 0:1 | X | Hitzebehandlung |
| Nr.6 | - | Bleistearat | 0:1 | X | Hitzebehandlung |

Tabelle 6

| | Thioamidverbindung | Bleiverbindung | Mischverhältnis | Hintergründfarbe | Nahe IR-Absorptionsfähigkeit | Beständigkeit gegenüber | | |
|---|---|---|---|---|---|---|---|---|
| | | | | | | Hitze | Luftfeuchtegkeit | Licht |
| Nr.24 | N-Phenylthiobenzamid | Blei-p-chlorbenzoat | 1:1 | 0.27 | ◎ | 96 | 96 | 99 |
| Nr.25 | N-Phenylthiobenzamid | Blei-p-chlorbenzoat | 0.5:1 | 0.27 | ◎ | 95 | 95 | 98 |
| Nr.26 | N-Phenylthiobenzamid | Blei-p-chlorbenzoat | 1:0.5 | 0.27 | ◎ | 94 | 92 | 94 |
| Nr.27 | N-Cyclohexylthiobenzamid | Blei-p-chlorbenzoat | 1:1 | 0.28 | ◎ | 97 | 94 | 98 |
| Nr.28 | N-Cyclohexylthiobenzamid | Blei-p-chlorbenzoat | 0.5:1 | 0.26 | ◎ | 95 | 95 | 97 |
| Nr.29 | N-Cyclohexylthiobenzamid | Blei-p-chlorbenzoat | 1:0.5 | 0.27 | ◎ | 94 | 93 | 94 |
| Nr.30 | N-Stearylthiobenzamid | Blei-p-chlorbenzoat | 1:1 | 0.28 | ◎ | 95 | 93 | 96 |
| Nr.31 | N-Stearylthiobenzamid | Blei-p-chlorbenzoat | 0.5:1 | 0.29 | ◎ | 92 | 92 | 93 |
| Nr.32 | N-Stearylthiobenzamid | Blei-p-chlorbenzoat | 1:0.5 | 0.26 | ◎ | 94 | 93 | 92 |
| Nr.8 | N-Phenylthiobenzamid | - | 1:0 | 0.09 | X | | | |
| Nr.9 | - | Blei-p-chlorbenzoat | 0:1 | 0.29 | X | | | |
| Nr.10 | N-Cyclohexylthiobenzamid | - | 1:0 | 0.08 | X | | | |
| Nr.11 | N-Stearylthiobenzamid | - | 1:0 | 0.08 | X | | | |

Die erfindungsgemäße im nahen IR absorbierende Masse und das diese Masse enthaltende Blatt sind fast farblos, wobei der erhitzte Teil sofort eine nahe IR-Absorptionsfähigkeit besitzt. Die Hitzebehandlung der erfindungsgemäßen Masse, des die erfindungsgemäße Masse enthaltenden Blattes, oder des diese hitzebehandelte Masse enthaltenden Blattes führt zur starken Absorptionsfähigkeit im ganz nahen IR-Bereich von 800 - 2000 nm. Wegen der obigen nahen IR-Absorptionsfähigkeit konnen die erfindungsgemäßen Produkte als optische Materialien wie als Thermodetektor; Filter für Licht im nahen IR-Bereich; Aufzeichnungsmaterial; Material zur Abweisung bzw. Isolierung von Wärmestrahlen; Wärmesammler; Sensor für IR-Detektoren und dergleichen verwendet werden.

Die erfindungsgemäße Masse oder das durch ihre Hitzebehandlung erhaltene Material wird trotz des Vorhandenseins von Metall nur gering verfärbt. Daher besitzen die diese Masse oder dieses Material enthaltenden Formkörper (Film, Blatt usw.) ein überlegenes Aussehen.

Jede Absorptionsfähigkeit von der erfindungsgemäßen im nahen IR absorbierenden Masse, dem erfindungsgemäßen im nahen IR absorbierenden Material und dem diese Masse oder diese Material enthaltenden Formkörper weist eine überlegene Stabilität gegenüber der Änderung der Umweltsbedingungem im Verlauf der Zeit auf, die sich nicht verschlechtert.

Weiter kann die erfindungsgemäße im nahen IR-absorbierende Masse nur durch die Mischung der Komponenten hergestellt werden, das erfindungsgemäße im nahen IR absorbierende Material nur durch Erhitzen dieser Mischung. Die Herstellung des Formkörpers, das die erfindungsgemäße Masse oder das erfindungsgemäße Material enthält, benötigt kein neues Mittel. Daher ist diese Erfindung für die industrielle Produktion geeignet.

**Ansprüche**

1. Masse zur Herstellung eines im nahen IR absorbierenden Materials, die mindestens eine Thioamidverbindung der allgemeinen Formel (I) und mindestens eine Kupfer- und/oder Bleiverbindung enthält:

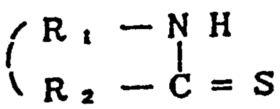

( I )

worin $R_1$ und $R_2$ jeweils ein Wasserstoffatom, eine Alkyl-, Alkenyl-, Cycloalkyl-, Aryl-, Aralkylgruppe, oder einen einwertigen 5- oder 6-gliedrigen Ring bedeuten, oder $R_2$ auch eine Alkoxygruppe bedeutet, wobei jede Gruppe durch mindestens einen Substituenten substituiert sein kann, oder $R_1$ und $R_2$ gemeinsam einen Ring bilden können.

2. Masse nach Anspruch 1, dadurch gekennzeichnet, daß die Kupferverbindung eine Kupferverbindung der Formel (II)
$(R - X)_n Cu$ (II)
ist,
worin R ein Wasserstoffatom, eine Alkyl-, Cycloalkyl-, Aryl-, Aralkylgruppe oder einen einwertigen 5- oder 6-gliedrigen Ring bedeutet, wobei jede Gruppe durch mindestens einen Substituenten substituiert sein kann, X für -COO, $-SO_4$, $-SO_3$, $-PO_4$, oder -O steht und n eine ganze Zahl von 1 bis 4 ist.

3. Masse nach Anspruch 1,
**dadurch gekennzeichnet,** daß die Kupferverbindung Kupferacetylacetonat ist.

4. Masse nach Anspruch 1, dadurch gekennzeichnet, daß die Kupferverbindung Chlorophyll-Kupfer oder Chlorophyllin-Kupfer oder Kupferhydroxid ist.

5. Masse nach Anspruch 1, dadurch gekennzeichnet, daß die Bleiverbindung eine Bleiverbindung der Formel (III)
$(R - X)_n Pb$ (III)
ist,
worin R ein Wasserstoffatom, eine Alkyl-, Cycloalkyl-, Aryl-, Aralkylgruppe, oder einen einwertigen 5- oder 6-gliedrigen Ring (heterocyclischer Ring) bedeutet, wobei jede Gruppe durch mindestens einen Substituenten substituiert sein kann, X - für -COO, $-SO_4$, $-SO_3$, $-PO_4$, oder -O steht und n eine ganze Zahl von 1 bis 4 ist.

6. Masse nach Anspruch 1, dadurch gekennzeichnet, daß die Bleiverbindung Bleiacetylacetonat ist.

7. Masse nach Anspruch 1, dadurch gekennzeichnet, daß die Bleiverbindung Chlorophyll-Blei oder

Chlorophyllin-Blei oder Bleihydroxid ist.

8. Im nahen IR absorbierendes Material erhältlich durch Hitzebehandlung der Masse nach einem der Ansprüche 1 bis 7.

9. Im nahen IR absorbierender Formkörper, dadurch gekennzeichnet, daß er die Masse nach einem der Ansprüche 1 bis 7 umfaßt.

10. Im nahen IR absorbierender Formkörper, erhältlich durch Hitzebehandlung des Formkörpers nach Anspruch 9.

11. Im nahen IR absorbierender Formkörper, dadurch gekennzeichnet, daß er das im nahen IR absorbierende Material nach Anspruch 8 umfaßt.

Abbildung 1

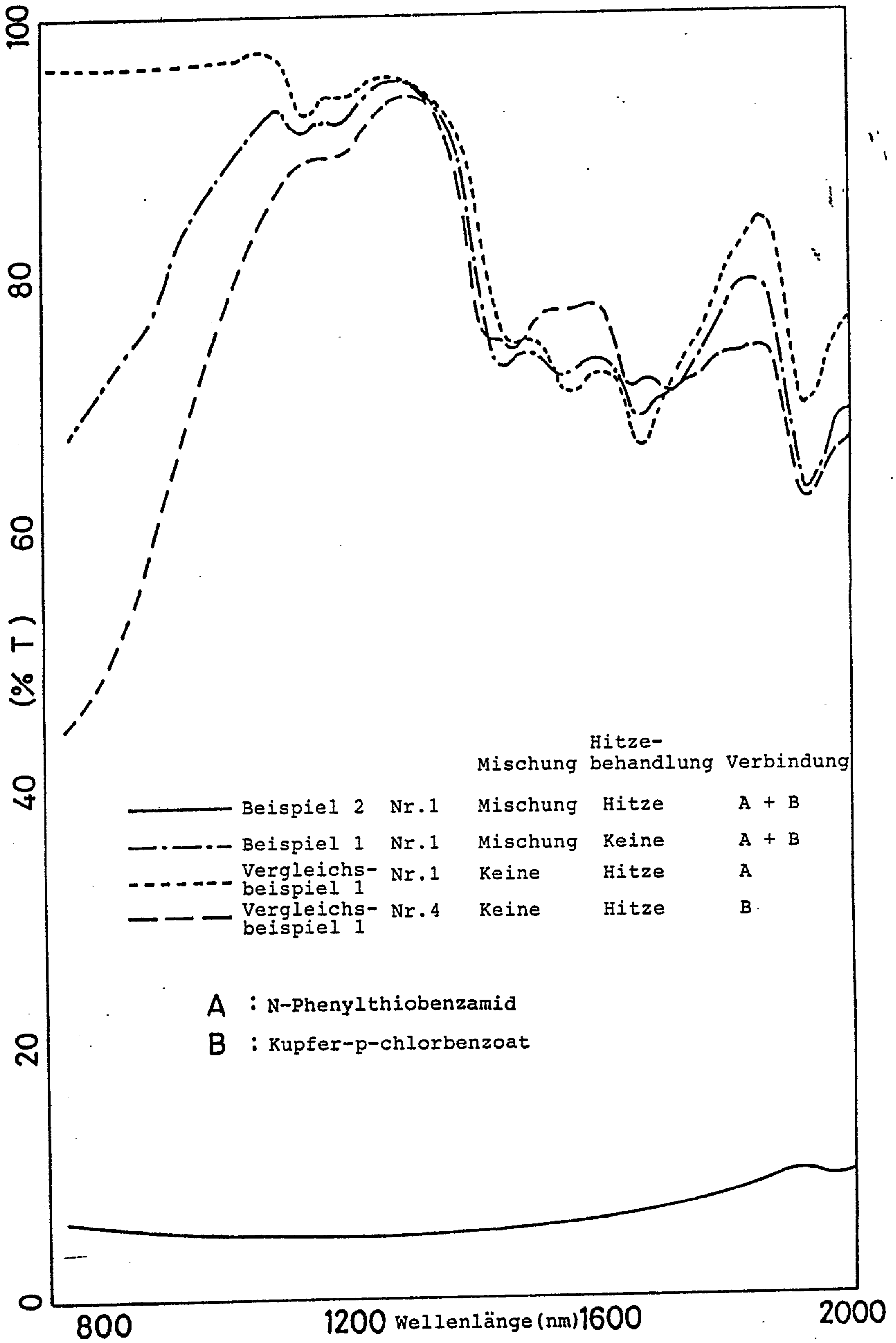
100
80
60
(% T)
40
20
0
800
1200
Wellenlänge (nm)
1600
2000
Mischung
Hitze-behandlung
Verbindung
Beispiel 2 Nr.1 Mischung Hitze A + B
Beispiel 1 Nr.1 Mischung Keine A + B
Vergleichs-beispiel 1 Nr.1 Keine Hitze A
Vergleichs-beispiel 1 Nr.4 Keine Hitze B
A : N-Phenylthiobenzamid
B : Kupfer-p-chlorbenzoat

Abbildung 2

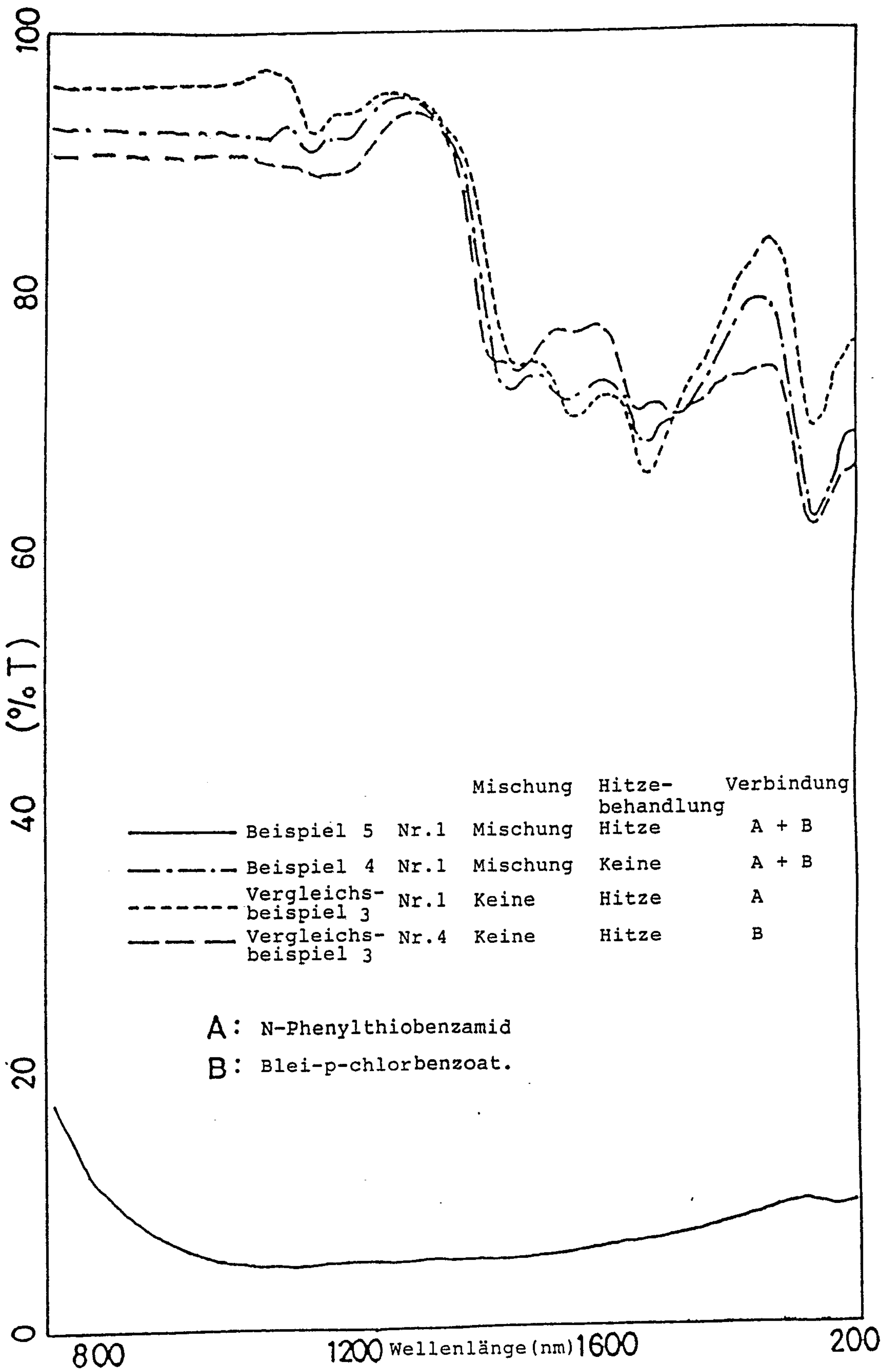
100
80
60
(% T)
40
20
0
800
1200
Wellenlänge (nm)
1600
200
Mischung
Hitze-behandlung
Verbindung
Beispiel 5 Nr.1 Mischung Hitze A + B
Beispiel 4 Nr.1 Mischung Keine A + B
Vergleichs-beispiel 3 Nr.1 Keine Hitze A
Vergleichs-beispiel 3 Nr.4 Keine Hitze B
A: N-Phenylthiobenzamid
B: Blei-p-chlorbenzoat.